# EUROPÄISCHE PATENTSCHRIFT

(11) **EP 0 832 024 B1**
(45) Veröffentlichungstag und Bekanntmachung des Hinweises auf die Patenterteilung: **01.09.1999**
(21) Anmeldenummer: 96917356.6
(22) Anmeldetag: 18.06.1996
(51) Int. Cl.: B62D 1/18, B60R 25/02

(54) **VERSTELLVORRICHTUNG**
ADJUSTING DEVICE
DISPOSITIF DE REGLAGE

(30) Priorität: 27.06.1995 DE 19523214
(43) Veröffentlichungstag der Anmeldung: 01.04.1998
(73) Patentinhaber: ROBERT BOSCH GMBH, 70442 Stuttgart (DE)
(72) Erfinder: POLLMANN, Gert, D-85113 Boehmfeld (DE)
(86) Internationale Anmeldenummer: DE9601070
(87) Internationale Veröffentlichungsnummer: WO9701476

(56) Entgegenhaltungen:
- DE-A- 3 725 908
- FR-A- 521 316
- US-A- 1 621 206

## Beschreibung

### Stand der Technik

Die vorliegende Erfindung betrifft eine Verstellvorrichtung für das Lenkrad eines Kraftfahrzeuges.

Aus der FR-A-5 213 16 ist eine Vorrichtung zum Blockieren der Lenkung einer Brennkraftmaschine bekannt. Hierbei wird die Lenksäule aus zwei ineinanderliegenden rohrförmigen Stäben gebildet, wobei die Kontur dieser rohrförmigen Stäbe so ausgeführt ist, daß sie gegeneinander verrastet und dann die Lenkung blockiert wird. Diese Blockierung kann über einen Code gesichert werden, so daß nur durch erneute Eingabe eine Entriegelung des Lenkrades möglich ist. Zum Verriegeln muß hierbei das Lenkrad in Richtung Fahrzeuglenker herausgezogen werden.

Aus der US-A-1621206 ist eine Lenkvorrichtung für ein Kraftfahrzeug bekannt, bei welcher das Lenkrad zunächst in Lenksäulenrichtung verschoben wird und dann zum Verriegeln geschwenkt werden muß. Hierbei sind zwei verschiedene Bewegungsabläufe notwendig, die eine entsprechend komplizierte konstruktive Gestaltung voraussetzen.

Aus der DE 37 25 908 A1 ist ein Kraftfahrzeug mit einem sperrbaren Lenkrad bekannt, wobei die Lenksäule in ihrem oberen Teil abknickbar ist und das Lenkrad mittels einer oberhalb der Armaturentafeln angeordneten, verschwenkbaren Haube mit einer einen Teil des Lenkrades aufnehmenden Vorrichtung arretierbar ist. Die Haube ist dabei mittels eines Schlosses in ihrer abgesenkten Sperrstellung festlegbar.

Es sind Verstellvorrichtungen für Lenkräder in Kraftfahrzeugen bekannt, die ein Verstellen der Höhe des Lenkrades zusammen mit der das Lenkrad tragenden Lenksäule durch eine Schwenkbewegung erlauben, womit der Fahrer des Kraftfahrzeuges die Lenkradhöhe an seine Bedürfnisse anpassen kann. Zur Höhenverstellung dient dabei beispielsweise ein manuell über eine koppelbetätigbarer Schwenkfuß an der Lenksäule. Auch ist es bekannt, das Lenkrad zum einen Aussteigen wegzuschwenken, damit mehr Bewegungsfreiraum zur Verfügung steht. Auch hier wird die Lenksäule zusammen mit dem Lenkrad um einen Schwenkfuß bewegt.

### Vorteile der Erfindung

Die erfindungsgemäße Verstellvorrichtung mit den kennzeichnenden Merkmalen des Hauptanspruchs hat demgegenüber den Vorteil, daß durch die in Lenksäulenrichtung gerichtete Verschiebbarkeit weniger Raum im Kraftfahrzeug zur Verstellung des Lenkrads nötig ist, wodurch sich eine noch größere Raumfreiheit für einen Fahrzeuglenker ergibt. Außerdem ist die Mechanik eines auf diese Weise verschiebbaren Lenkrades besonders einfach herstellbar und das Gehäuse für die Aufnahme der Lenksäule weniger aufwendig.

Durch die in den Unteransprüchen aufgeführten Maßnahmen sind vorteilhafte Weiterbildungen und Verbesserungen des im Hauptanspruch angegebenen Lenkrades möglich.

Eine Lenkradverriegelungsvorrichtung hat den Vorteil, daß ein eventueller Diebstahlsversuch am Fahrzeug erschwert wird.

Das Ver- oder Entriegeln des Lenkrades mittels der Lenkradverriegelungsvorrichtung beim Verschieben des Lenkrades vereinigt in vorteilhafter Weise ein Verschieben des Lenkrades zum bequemen Einsteigen in bzw. Aussteigen aus dem Fahrzeug mit einem automatischen Ver- oder Entriegeln, welches üblicherweise beim Einsteigen in bzw. Aussteigen aus einem Fahrzeug erwünscht ist, so daß sich ein aktives Ver- oder Entriegeln erübrigt.

Es erweist sich zudem als raumsparend und herstellungskostengünstig, wenn die Lenkradverriegelungsvorrichtung am Gehäuse eines hinter dem Lenkrad angeordneten Anzeigeinstrumentes angeordnet ist.

Zudem kann das Schloß zur Ent- bzw. Verriegelung des Lenkrades mittels der Lenkradverriegelungsvorrichtung ebenfalls am Gehäuse angeordnet sein, wodurch sich das Auf- und Abschließen der Lenkradverriegelungsvorrichtung räumlich gut mit dem Schloß zusammenfassen läßt und sich in zu einer das Schloß betätigenden Person günstiger Nähe befindet.

Ein in das Lenkrad eingreifendes Riegelelement, welches das Lenken behindert, stellt eine zuverlässige Diebstahlsicherung dar und offenbart sich einem potentiellen Fahrzeugdieb besonders deutlich, wodurch auch eine Abschreckungswirkung erreicht wird.

Ein wenigstens teilweises Versenken des Lenkrads im Gehäuse des Anzeigeinstruments stellt eine vorteilhafte Maßnahme dar, da der Raum des Anzeigeinstrumentengehäuses aufgrund seiner Lage und seiner Bauweise eine besonders leicht für das Lenkrad zugängliche Aussparung ohnehin bereits aufweist.

Wenn die Kontur des Gehäuses der Außenkontur des Lenkrades wenigstens teilweise angepaßt ist, so läßt sich eine besonders raumsparende Anordnung auf diese Weise verwirklichen.

Wenn das Lenkrad zusätzlich auch noch in einer zur Lenksäule annähernd senkrechten Richtung verschiebbar oder verschwenkbar ist, so weist das Lenkrad ein Maximum an Verstellmöglichkeiten auf, wodurch eine große Freiheit eines Fahrzeuglenkers für die Verstellung des Lenkrads beim Ein- bzw. Aussteigen und auch zur Einstellung der von ihm gewünschten Lenkradposition besteht.

### Zeichnung

Ausführungsbeispiele der Erfindung sind in der Zeichnung dargestellt und in der nachfolgenden Beschreibung näher erläutert.

### Es zeigen:

Figur 1 ein erstes Ausführungsbeispiel eines Lenkrades mit Verstellvorrichtung in eingefahrenem Zustand,
Figur 2 das Lenkrad mit Verstellvorrichtung aus Figur 1 in ausgefahrenem Zustand,
Figur 3 eine Frontalansicht des Lenkrades mit Verstellvorrichtung aus Figur 1,
Figur 4 ein weiteres Ausführungsbeispiel für ein Lenkrad mit Verstellvorrichtung im eingefahrenen Zustand.

### Beschreibung der Ausführungsbeispiele

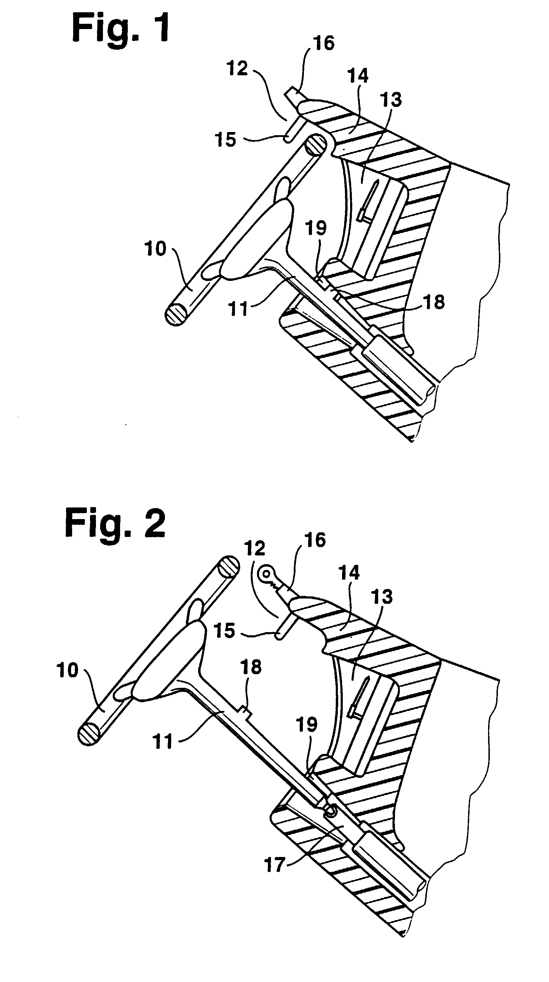

In Figur 1 ist eine aufgeschnittene schematische Seitenansicht eines Lenkrades 10, beispielsweise in einem Fahrzeuginnenraum gezeigt, das drehbar auf einer Lenksäule 11 gehaltert ist. Das Lenkrad 10 befindet sich dabei teilweise vor einem Anzeigeinstrument 13, das in einem Gehäuse 14 angeordnet ist. Die Lenksäule 11 ebenfalls im Gehäuse 14 des Anzeigeinstruments 13 gehaltert. Am Gehäuse 14 ist zudem eine Verriegelungsvorrichtung 12, die ein Riegelelement 15 aufweist, angebracht. Zur Bedienung der Verriegelungsvorrichtung 12 ist am Gehäuse 14 außerdem ein Schloß 16 vorhanden. Das Lenkrad 10 ist zusammen mit der Lenksäule 11 in einer Richtung, die in etwa parallel zur Lenksäule 11 ist, verschiebbar. Beispielsweise ist dazu die Lenksäule 11 als Teleskopsäule ausgebildet. Im eingeschobenen Zustand ragt das Lenkrad 10 teilweise in das Gehäuse 14 hinein. Das Riegelelement 15 liegt dabei so vor dem Lenkrad 10, daß ein Wiederherausbewegen des Lenkrades 10 mit der Lenksäule 11 nur nach einem Entriegeln des Riegelelements 15 mittels Betätigung des Schlosses 16 möglich ist. An der Lenksäule 11 ist zudem eine Sperrnase 18 angebracht, die innerhalb einer Aussparung 19 im Gehäuse 14 liegt. Die Verriegelungsvorrichtung 12 sowie die Mechanik zum Verstellen des Lenkrades 10 in Richtung der Lenksäule 11 bilden gemeinsam eine Verstellvorrichtung für das Lenkrad 10.

Die Funktionsweise der Verstellvorrichtung des Lenkrades 10 wird im weiteren im Zusammenhang mit der Figur 2 erläutert.

Die in der Figur 2 gezeigte Darstellung unterscheidet sich von der Darstellung in Figur 1 dadurch, daß das Lenkrad 10 mit der Lenksäule 11 ausgefahren ist. Dazu wurde das Schloß 16 mit einem Schlüssel geöffnet, so daß sich das Riegelelement 15 aus seiner Verriegelungsstellung herausbewegen ließ. Dadurch wurde auch das Lenkrad 10 entriegelt und ließ sich herausfahren. Beim Herausfahren trennen sich Sperrnase 18 und Aussparung 19, so daß ein ordnungsgemäßes Lenken möglich ist. In der Lenksäule 11 ist hier zudem ein Kardangelenk 17 vorgesehen, das beim Ausfahren der Teleskopglieder frei wird und das ein zusätzliches Verschwenken der Lenksäule 11 erlaubt.

Die dargestellte Anordnung ist beispielsweise realisierbar, indem die Teleskopglieder Teile einer Gasfeder sind, und das Lenkrad 10 gegen den Federdruck in die eingefahrene Stellung gebracht wird. Der Federdruck der Gasfeder kann dann für ein automatisches Ausfahren des Lenkrades 10 beim Aufsperren des Schlosses 16 dienen. Es sind aber auch andere Mechanismen möglich, wie eine aktive pneumatische oder hydraulische Bewegung der Lenksäule 11 oder auch ein Ratschenmechanismus, welcher beispielsweise mit dem Schloß 16 so verbunden werden kann, daß das Ausfahren erst nach dem Aufschließen erfolgen kann, das Einfahren aber auch ohne eine Schloßbetätigung möglich ist. Es ist ebenso vorgesehen, eine Sperre vorzusehen, die das Einfahren des Lenkrades 10 während der Fahrt ausschließt. Weiterhin ist es vorgesehen, das Einfahren und das Ausfahren grundsätzlich von einer Betätigung des Schloßes 16 abhängig zu machen, wobei das Schloß 16 auch mit dem Zündschloß des Fahrzeugs funktionell kombiniert bzw. einstückig ausgebildet sein kann.

Durch das Hineinbewegen des Lenkrades 10 in Richtung zum Gehäuse 14 wird außerdem der für einen Fahrzeuglenker zugängliche Innenraum des Fahrzeuges vergrößert. Dies ist vor allem dann von Vorteil, wenn der Fahrzeuglenker aus dem Fahrzeug aus- bzw. in das Fahrzeug einsteigen möchte. Zugleich wird mit dem Einschieben des Lenkrades 10 mit der Lenksäule 11 in das Gehäuse 14 die Verriegelungsvorrichtung 12 verriegelt und durch Sperrnase 18 und Aussparung 19 sichergestellt, daß mit dem eingefahrenen Lenkrad 10 keine oder nur eingeschränkte Lenkbewegungen auf das Fahrzeug übertragen werden können. Anstelle der Sperrnase 18 und der Aussparung 19 kann beispielsweise auch in der Teleskoplenksäule 11 mit dem Einfahren des Lenkrades 10 eine mechanisch schlüssige Verbindung zwischen dem Lenkrad 10 und den zu lenkenden Rädern geöffnet werden, so daß das Lenkrad 10 zwar drehbar ist, aber keine Lenkwirkung entfaltet.

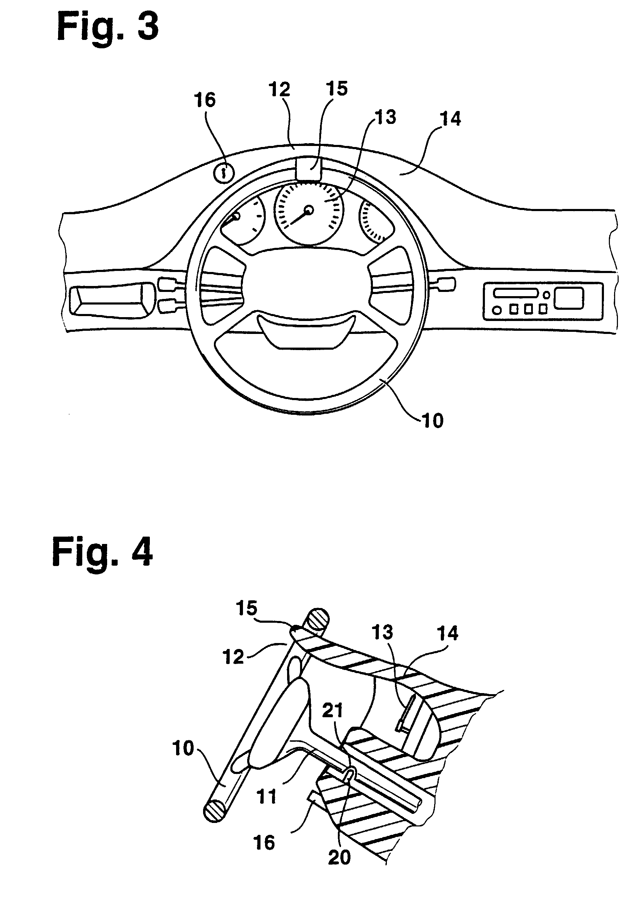

Eine Draufsicht auf die in Figur 1 dargestellte Anordnung ist in der Figur 3 zu sehen. Die Außenkontur des Lenkrades 10 ist der Innenkontur des Gehäuses 14 angepaßt. Dies ergibt eine optimale Raumaussnutzung und eine ideale Realisierbarkeit für das Verriegeln des Lenkrades 10 mit dem Riegelelement 15. Positiv für diese formschlüssige Anordnung im ineinandergeschobenen Zustand stellt sich dabei die Tatsache heraus, daß Anzeigeinstrumente 13 bekannter Bauart ohnehin üblicherweise hinter dem Lenkrad 10 angeordnet sind und für eine gute Sichtbarkeit durch den Fahrer ein entsprechend großzügig ausgeformtes Gehäuse 14 aufweisen. Da der Fahrer während des Stillstands des Fahrzeugs bzw. beim Ein- und Aussteigen ohnehin keine Sicht auf das Anzeigeinstrument 13 benötigt, ist der Raum vor dem Anzeigeinstrument 13 und innerhalb des Gehäuses 14 ohne Sicherheitsbedenken für das Einfahren des Lenkrades 10 ausnutzbar. Zur besseren Sicherung sind auch mehrere Nasen 18 und/oder mehrere Aussparungen 19 anordenbar.

In Figur 4 ist unter Beibehaltung der Numerierung aus den vorhergehenden Figuren ein weiteres Ausführungsbeispiel dargestellt. Das Lenkrad 10 weist hier einen größeren Durchmesser auf, so daß eine Anpassung der Außenkontur des Gehäuses 14, im Gegensatz zu der in den Figuren 1 bis 3 dargestellten Ausführungsform, nicht sinnvoll ist. Hier ist dagegen ein Teil des Gehäuses 14 so ausgebildet, daß er als Riegelelement 15 für die Verriegelungsvorrichtung 12 dienen kann. Außerdem ist ein Sperrhaken 20 vorgesehen, der in eine Vertiefung 21 in der Lenksäule 11 eingreift, sobald das Lenkrad 10 in den eingefahrenen Zustand gebracht wurde.

Das längliche Riegelelement 15 gelangt beim Einschieben des Lenkrades 10 automatisch zwischen Speichen des Lenkrades 10, verhindert so ein ordnungsgemäßes Lenken des Fahrzeuges und ersetzt somit das Sperrelement 18 und die Aussparung 19, die deshalb hier nicht vorgesehen sind. Auch hier ist erst durch ein Aufsperren des Schlosses 16 ein Herausbewegen des Lenkrades 10 in seine Betriebsstellung möglich, da der Sperrhaken 20 nur durch das Aufsperren des Schlosses 16 aus der Vertiefung 21 bewegt wird. Somit tritt auch hier eine Kombination des Einfahrens des Lenkrades 10 mit einer Verriegelung desselben auf. Analog kann, je nach Platzverteilung im Umfeld des Lenkrades 10 auch eine Verriegelung durch das Herausfahren des Lenkrades 10 um einen bestimmten Weg ausgelöst werden, da es auch möglich ist, daß das Lenkrad 10 durch das Herausbewegen mehr Bewegungsfreiheit für einen Fahrer, insbesondere beim Ein- und Aussteigen, bietet. Die Funktionen des Verriegelns des Lenkrades 10 in axialer Richtung zur Lenksäule 11 und des Verhinderns des Lenkens können auch mit einem einzigen Riegelelement 15 gemeinsam bewirkt werden, wenn dieses entsperechend ausgebildet ist.

Es ist weiterhin vorgesehen, das Lenkrad 10 mit der Lenksäule 11 nicht nur in zur Lenksäule 11 paralleler Richtung verschiebbar, sondern auch in andere Richtungen verschwenkbar oder verschiebbar zu gestalten, so wie mit dem Kardangelenk 17 in Figur 2 beispielhaft dargestellt. Dadurch bleibt dem Fahrzeuglenker nach wie vor die Freiheit, das Lenkrad 10 seinen Bedürfnissen gerecht anzupassen und außerdem den Raum beim Ein- bzw. Aussteigen auf ein Maximum der Verfügbarkeit zu erhöhen.

Sämtliche Riegel- und/oder Sperrmechanismen können miteinander kombiniert und auch mehrfach angeordnet werden.

## Patentansprüche

1. Verstellvorrichtung für ein Lenkrad in einem Kraftfahrzeug, welches auf einer drehbaren Lenksäule gehaltert ist und mittels der Verstellvorrichtung in einer zur Lenksäule (11) annähernd parallelen Richtung verschiebbar ist, wobei hinter dem Lenkrad (10) ein Anzeigeinstrument (13) mit einem Gehäuse (14) angeordnet ist, daduruch gekennzeichnet, daß das Lenkrad (10) mittels der Verstellvorrichtung wenigstens teilweise im Gehäuse (14) des Anzeigeinstruments (13) versenkbar ist, daß die Verstellvorrichtung eine Lenkradverriegelungsvorrichtung (12) aufweist, welche beim Hineinbewegen des Lenkrades (10) in Richtung Gehäuse (14) ein Verriegeln des Lenkrades bewirkt und nach dem Entriegeln ein Herausbewegen des Lenkrades (10) ermöglicht.

2. Verstellvorrichtung nach Anspruch 1, dadurch gekennzeichnet, daß die Lenkradverriegelungsvorrichtung (12) am Gehäuse (14) angeordnet ist.

3. Verstellvorrichtung nach Anspruch 1 oder 2, dadurch gekennzeichnet, daß die Lenkradverriegelungsvorrichtung (12) wenigstens ein Riegelelement (15) aufweist, das im das Lenkrad (10) verriegelnden Zustand ein Verschieben des Lenkrades (10) verhindert und/oder das Lenken mittels des Lenkrades (10) behindert.

4. Verstellvorrichtung nach Anspruch 1 bis 3, dadurch gekennzeichnet, daß die Kontur des Gehäuses (14) der Außenkontur des Lenkrades (10) wenigstens teilweise angepaßt ist.

5. Lenkrad nach einem der Ansprüche 1 bis 4, dadurch gekennzeichnet, daß mittels der Verstellvorrichtung das Lenkrad (10) zusätzlich in einer zur Lenksäule (11) annähernd senkrechten Richtung verschiebbar oder verschwenkbar ist.

## Claims

1. Adjusting device for a steering wheel in a motor vehicle, which steering wheel is held on a rotatable steering column and can be displaced by means of the adjusting device in a direction approximately parallel to the steering column (11), a display instrument (13) with a housing (14) being arranged behind the steering wheel (10), characterized in that the steering wheel (10) can be lowered at least partially in the housing (14) of the display instrument (13) by means of the adjusting device, and in that the adjusting device has a steering wheel locking device (12) which locks the steering wheel (10) when the latter moves inwards in the direction of the housing (14) and permits the steering wheel (10) to be moved outwards after unlocking.

2. Adjusting device according to Claim 1, characterized in that the steering wheel locking device (12) is arranged on the housing (14).

3. Adjusting device according to Claim 1 or 2, characterized in that the steering wheel locking device (12) has at least one latching element (15) which, in the state locking the steering wheel (10), prevents displacement of the steering wheel (10) and/or impedes steering by means of the steering wheel (10).

4. Adjusting device according to Claims 1 to 3, characterized in that the contour of the housing (14) is matched at least partially to the outer contour of the steering wheel (10).

5. Steering wheel according to one of Claims 1 to 4, characterized in that, by means of the adjusting device, the steering wheel (10) can additionally be displaced or swivelled in a direction approximately perpendicular to the steering column (11).

## Revendications

1. Dispositif de réglage d'un volant dans un véhicule automobile porté par une colonne de direction rotative et coulissant grâce au dispositif de réglage dans une direction sensiblement parallèle à celle de la colonne de direction (11), et derrière le volant (10) se trouve un instrument d'affichage (13) avec un boîtier (14),
caractérisé en ce que
• le volant (10) peut être enfoncé au moins partiellement dans le boîtier (14) de l'instrument d'affichage (13) par le dispositif de réglage,
• le dispositif de réglage comporte un dispositif de verrouillage de volant (12) qui, lorsqu'on enfonce le volant (10) en direction du boîtier (14) assure le verrouillage du volant et après déverrouillage, il permet le dégagement du volant (10).

2. Dispositif de réglage selon la revendication 1,
caractérisé en ce que
le dispositif de verrouillage du volant (12) est logé dans le boîtier (14).

3. Dispositif de réglage selon la revendication 1 ou 2,
caractérisé en ce que
le dispositif de verrouillage de volant (12) comporte au moins un élément de verrouillage (15) qui évite pour le volant (10) en position de verrouillage, un coulissement du volant (10) et/ou l'utilisation du volant (10) pour guider.

4. Dispositif de réglage selon les revendications 1 à 3,
caractérisé en ce que
le contour du boîtier (14) est en partie au moins adapté au contour extérieur du volant (10).

5. Dispositif de réglage selon l'une quelconque des revendications 1 à 4,
caractérisé en ce que
ce dispositif de réglage permet de coulisser ou de basculer le volant (10) en plus dans une direction sensiblement perpendiculaire à celle de la colonne de direction (11).
